# FASCICULE DE BREVET EUROPEEN

(11) **EP 0 327 425 B1**
(45) Date de publication et mention de la délivrance du brevet: **21.04.1993**
(21) Numéro de dépôt: 89400202.1
(22) Date de dépôt: 25.01.1989
(51) Int. Cl.: G02B 21/00, G01B 11/30

(54) **Procédé de microscopie optique confocale à balayage et en profondeur de champ étendue et dispositifs pour la mise en oeuvre du procédé**
Verfahren zur optischen Abtastmikroskopie in konfokaler Anordnung mit grossem Tiefenschärfenbereich und Vorrichtung zur durchführung des Verfahrens
Method for optical scanning microscopy in confocal arrangement with large depth of field and apparatus to perform this method

(30) Priorité: 27.01.1988 FR 8800934
(43) Date de publication de la demande: 09.08.1989
(73) Titulaire: COMMISSARIAT A L'ENERGIE ATOMIQUE, 75015 Paris Cédex 15 (FR)
(72) Inventeur: Picard, Bernard, F-38400 Saint Martin d'Hères (FR)
(74) Mandataire: Mongrédien, André

(56) Documents cités:
- EP-A- 0 108 497
- EP-A- 0 167 410
- EP-A- 0 183 415
- WO-A-87/03957
- DE-A- 3 447 467
- DE-A- 3 610 165

## Description

La présente invention a pour objet un procédé de microscopie optique confocale à balayage et en profondeur de champ étendue et des dispositifs pour la mise en oeuvre du procédé.

Elle s'applique notamment à l'imagerie microscopique en profondeur de champ étendue réalisée à grande vitesse, en particuler à l'inspection en microélectronique.

D'une manière générale, pour effectuer de la microscopie optique confocale à balayage, on procède comme suit : on forme un faisceau lumineux que l'on dirige vers un système de focalisation.

On focalise le faisceau, grâce à ce système de focalisation, sur un objet à étudier.

On renvoie, par une lame séparatrice, un faisceau de lumière réfléchie par l'objet à étudier vers un système de détection, d'analyse et de traitement numérique du signal détecté.

On détecte l'intensité de lumière renvoyée par la lame séparatrice, on analyse et on traite numériquement les signaux détectés.

On effectue un balayage du faisceau lumineux sur l'objet à étudier, soit en déplaçant le faisceau lumineux, l'objet étant fixe, soit en déplaçant l'objet, le faisceau étant fixe.

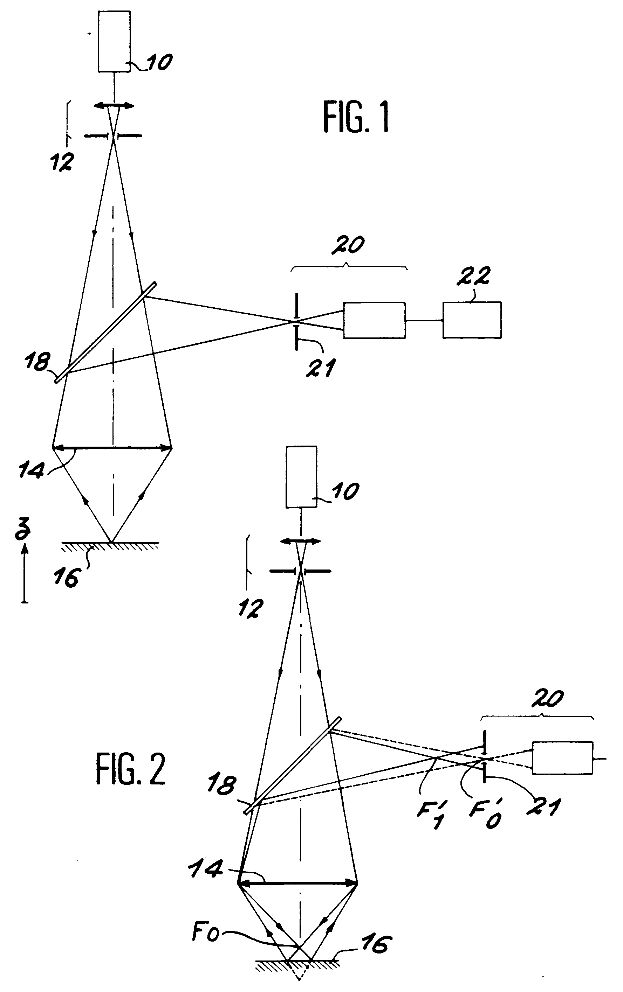

Un dispositif connu permettant la mise en oeuvre de ce procédé est représenté schématiquement figure 1.

Un faisceau lumineux délivré par une source lumineuse monochromatique 10, tel un laser par exemple, est focalisé et filtré spatialement par des moyens 12 de focalisation, une lentille par exemple, et de filtrage, un diaphragme par exemple. Ceci permet d'obtenir une intensité uniformément répartie sur la section du faisceau. Le faisceau est ensuite refocalisé sur l'objet 16 à étudier par des moyens 14 de focalisation, un objectif par exemple. Le faisceau est réfléchi par l'objet à étudier, et renvoyé par une lame séparatrice 18 vers un système de détection 20 relié à un système 22 d'analyse et de traitement numérique des signaux détectés. Le système de détection 20 comporte un diaphragme 21 placé en un point conjugué du point focal des moyens 14 de focalisation. L'image obtenue après traitement numérique est représentative des variations de réflectivité de l'objet 16 à étudier à l'échelle microscopique. Le diaphragme 21, dont l'ouverture est de quelques dizaines de microns par exemple, permet d'éviter la détection de la lumière provenant de faisceaux non focalisés sur l'objet à étudier. L'effet de la défocalisation sur la formation des images est illustré par la figure 2.

On appelle F0 le point de focalisation du faisceau après passage par les moyens 14 de focalisation.

Lorsque l'objet 16 est placé dans le plan focal des moyens 14 de focalisation, le point conjugué du point F0 est le point F'0 situé dans le plan du diaphragme 21. La dimension de la tache lumineuse dans ce plan est alors minimale et l'énergie recueillie par le système de détection 20 est maximale.

Lorsque l'objet 16 est éloigné du plan focal des moyens 14 de focalisation, l'image F'1 du faisceau lumineux réfléchi par l'objet est éloignée de F'0. La tache lumineuse, dans le plan du diaphragme 21, est élargie, l'énergie lumineuse recueillie par le système 20 de détection est beaucoup plus faible que précédemment.

En présence d'un tel diaphragme 21, le microscope est utilisé en mode dit confocal. Le diaphragme 21 permet un gain dans la résolution de l'image finale d'un facteur 1,4, approximativement, par rapport à la résolution d'une image obtenue sans diaphragme.

Sur la figure 1 ne sont pas représentés les moyens mis en oeuvre pour obtenir le balayage du faisceau sur l'objet 16.

Dans ce type de dispositif, la profondeur de champ est très faible, de l'ordre de 0,3 à 0,5 µm.

A partir du dispositif représenté figure 1, on peut faire de l'imagerie en profondeur de champ étendue. Il suffit de faire des coupes à des altitudes successives distantes de 0,5 µm, par exemple. De manière connue, on effectue un balayage de l'objet 16, à une altitude z1 puis on déplace l'objet 16 dans l'axe z du dispositif à une altitude z2, à laquelle on effectue un nouveau balayage et ainsi de suite.

Ce procédé est décrit au chapitre 5, page 123 du livre Theory and Practice of SCANNING OPTICAL MICROSCOPY écrit par Tony Wilson, Colin Sheppard, Academic press en 1984, ainsi que dans le document DE-A-3 447 467.

La profondeur de champ obtenue est alors limitée par le nombre de coupes successives effectuées.

Ce procédé présente l'inconvénient de nécessiter plusieurs acquisitions d'images successives, ce qui réduit d'autant la vitesse d'imagerie du microscope. Selon les dispositifs connus utilisés, la formation de l'image d'une coupe de l'objet 16 (profondeur de champ 0,5 µm) peut prendre jusqu'à 2 s. Dans le cas d'un dispositif synchronisé avec un moniteur vidéo, le temps de formation d'une image est le temps de balayage d'une trame du moniteur vidéo. On doit multiplitr ces temps par le nombre d'images successives voulues correspondant à la profondeur de champ étendue désirée.

On connaît ainsi d'après le document EP-A-0 108 497, un dispositif permettant de déterminer des différences d'altitude sur un objet, par mesure d'interférences entre des composantes d'un faisceau laser modulées acousto-optiquement.

La présente invention permet de faire de la microscopie optique à balayage en profondeur de champ étendue en un seul balayage de l'objet 16 à étudier par le faisceau. On évite l'acquisition séquentielle et on réduit donc d'autant la vitesse d'acquisition d'une image complète.

De manière précise, la présente invention a pour objet un procédé de microscopie optique confocale à balayage et en profondeur de chanp étendue. Le procédé consiste à :
- former un faisceau lumineux principal constitué d'une pluralité de faisceaux lunineux secondaires et distinguant les uns des autres par au moins une de leurs caractéristiques,
- diriger le faisceau lumineux principal vers des moyens de focalisation, dont la distance de focalisation est fonction d'au moins une desdites caractéristiques,
- focaliser à un endroit de l'objet à étudier, grâce aux moyens de focalisation, en des points d'altitude différente, les différents faisceaux lumineux secondaires,
- renvoyer les faisceau lumineux secondaires réfléchis par l'objet à étudier vers un système de détection,
- détecter l'intensité de lumière des faisceaux secondaires,
- analyser et traiter numériquement les signaux détectés, et
- répéter les étapes précédentes en différents endroits de l'objet, effectuant ainsi un balayage du faisceau lumineux principal sur la totalité de l'objet à étudier.

Selon une caractéristique du procédé, les faisceaux lumineux secondaires se distinguent les uns des autres par leur longueur d'onde qui est différente pour chacun des faisceaux secondaires.

Selon une autre caractéristique du procédé, les faisceaux lumineux se distinguent les uns des autres par leur amplitude qui est modulée temporellement de façon caractéristique pour chacun des faisceaux secondaires.

La présente invention a aussi pour objet un dispositif pour la mise en oeuvre du procédé. Ce dispositif comporte :
- une source lumineuse délivrant un faisceau lumineux principal se propageant vers un objet à étudier :
- des premiers moyens de focalisation et de filtrage spatial dudit faisceau lumineux principal,
- des seconds moyens de focalisation, focalisant ledit faisceau sur l'objet à étudier,
- une lame séparatrice renvoyant un faisceau lumineux réfléchi par l'objet à étudier,
- un système de détection délivrant un signal sur une sortie, et comportant un diaphragme placé en un point conjugué d'un point de focalisation des seconds moyens de focalisation,
- un système d'analyse et de traitement numérique ayant une entrée reliée à la sortie du système de détection.

La source lumineuse est polychromatique et le faisceau lumineux principal est constitué d'une pluralité de faisceaux secondaires de longueur d'onde différente. Les seconds moyens de focalisation présentent un chromatisme par rapport à la direction de propagation dudit faisceau lumineux principal (chromatisme axial).

Ce dispositif ne distingue pas les différents plans de focalisation et délivre une image où l'on ne voit pas apparaître le relief de l'objet 16 à étudier : les détails de surface apparaissent sur le même plan, quelle que soit l'altitude de la surface considérée.

Dans un mode préféré de réalisation, le dispositif comprend :
- un système optique à dispersion latérale placé sur le trajet du faisceau réfléchi par l'objet à étudier renvoyé par la lame séparatrice et séparant latéralement par rapport à leurs directions de propagation respectives, les faisceaux secondaires de longueur d'onde différente qui constituent ledit faisceau réfléchi,
- des systèmes de détection aptes à recevoir chacun un faisceau secondaire séparé par le système optique à dispersion latérale, chaque système de détection comprenant un diaphragme placé en un point conjugué d'un point focal des moyens de focalisation, les systèmes de détection délivrant des signaux sur des sorties reliées à des entrées d'un système d'analyse et de traitement desdits signaux.

Ce dernier mode de réalisation permet de rétablir le relief de l'objet à étudier.

L'étendue de la profondeur de champ correspond à la dispersion chromatique axiale des moyens de focalisation et à l'extension chromatique de la source lumineuse polychromatique.

Selon un mode préféré de réalisation, le dispositif optique à dispersion latérale est un réseau de diffraction.

Selon un autre mode de réalisation, le dispositif optique à dispersion latérale est un prisme.

Dans un autre mode de réalisation, le dispositif selon l'invention comprend sur le trajet du faisceau principal, entre la source lumineuse et les premiers moyens de focalisation et de filtrage :
- des moyens pour séparer spatialement les différents faisceaux secondaires,
- des moyens pour moduler temporellement l'amplitude de chaque faisceau secondaire à une fréquence particulière,
- des moyens pour superposer les différents faisceaux secondaires pour reformer un faisceau principal, et pour diriger ledit faisceau principal vers les premiers moyens de focalisation et de filtrage spatial.

Dans un mode préféré de réalisation, les moyens pour séparer spatialement les différents faisceaux secondaires comprennent des lames séparatrices et un miroir de renvoi du faisceau principal résiduel après traversée des lames séparatrices, formant un faisceau secondaire ;
les moyens pour superposer les faisceaux secondaires comprennent des lames séparatrices et un miroir de renvoi du faisceau secondaire issu d'une première séparation d'un faisceau secondaire du faisceau principal ;
les lames séparatrices ne réfléchissent qu'un seul des faisceaux secondaires et pas les autres.

Dans un autre mode de réalisation, les moyens pour séparer spatialement les faisceaux lumineux secondaires comprennent un réseau de diffraction et une lentille telle que les faisceaux lumineux secondaires après traversée de ladite lentille sont parallèles et les moyens pour superposer les faisceaux secondaires comprennent une lentille traversée par lesdits faisceaux secondaires et un réseau de diffraction renvoyant les faisceaux superposés vers les premiers moyens de focalisation et de filtrage spatial.

Dans un mode préféré de réalisation, les moyens pour moduler temporellement l'amplitude de chaque faisceau secondaire sont des éléments acousto-optiques.

Dans un mode préféré de réalisation, la source lumineuse polychromatique est un laser émettant des faisceaux à au moins deux longueurs d'onde différentes.

Dans un autre mode de réalisation, la source lumineuse polychromatique est constituée par au moins deux lasers émettant des faisceaux de longueurs d'onde différentes.

Dans un autre mode de réalisation, le dispositif selon l'invention comporte une source lumineuse délivrant un faisceau lumineux principal se propageant vers un objet à étudier.

Il comprend aussi :
- des moyens pour diviser le faisceau lumineux principal en une pluralité de faisceaux secondaires et pour renvoyer les faisceaux secondaires vers des moyens pour moduler temporellement l'amplitude de chaque faisceau secondaire à une fréquence particulière,
- des premiers moyens de focalisation présentant une distance de focalisation différente pour chaque faisceau secondaire,
- des moyens de recombinaison et de renvoi des faisceaux secondaires en un faisceau principal résultant de la recombinaison,
- des deuxièmes moyens de focalisation comportant un premier système et un second système de focalisation et permettant la focalisation à des altitudes différentes de chacun des faisceaux secondaires,
   et une lame séparatrice placée entre la source lumineuse et les moyens de séparation du faisceau principal, sur le trajet d'un faisceau réfléchi par l'objet à étudier, ledit faisceau réfléchi ayant retraversé en sens inverse les différents éléments du dispositif, renvoie ledit faisceau réfléchi vers un système de détection par l'intermédiaire de moyens de focalisation et de filtrage.

Dans un mode de réalisation de ce dernier dispositif, la modulation de l'amplitude de chaque faisceau secondaire s'effectue à la même fréquence pour chacun des faisceaux secondaires, la phase de chacune des modulations étant différente.

Dans un mode de réalisation de ce dernier dispositif la modulation de l'amplitude de chaque faisceau secondaire s'effectue à une fréquence différente pour chacun des faisceaux secondaires.

D'autres caractéristiques et avantages de l'invention ressortiront mieux de la description qui va suivre, donnée à titre purement illustratif et nullement limitatif en référence aux figures 3 à 7 annexées dans lesquelles :
- la figure 3 représente un dispositif selon l'invention ;
- la figure 4 représente une variante du dispositif selon l'invention ;
- la figure 5 représente une variante du dispositif selon l'invention ;
- la figure 6 représente un dispositif de séparation spatiale des faisceaux lumineux secondaires ;
- la figure 7 représente un dispositif selon l'invention utilisant une source lumineuse monochromatique.

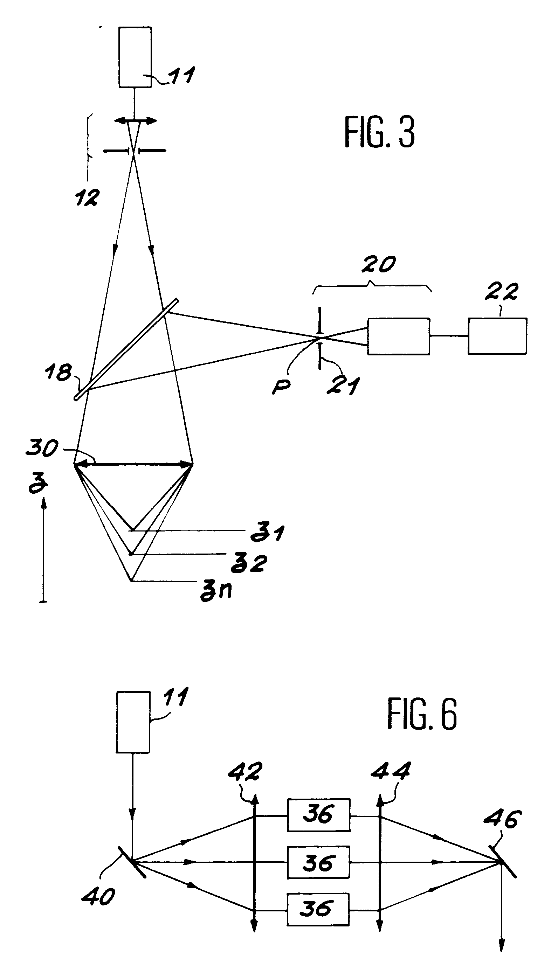

On voit sur la figure 3 un dispositif selon l'invention. Une source lumineuse 11 polychromatique délivre un faisceau lumineux principal constitué d'une pluralité de faisceaux secondaires. La source lumineuse 11 peut être un laser dont le matériau actif est de l'Argon et qui émet des rayonnements à plusieurs longueurs d'onde, par exemple. La source lumineuse peut être la réunion de plusieurs lasers émettant des rayonnements à des longueurs d'onde différentes, par exemple. Le faisceau principal est focalisé et filtré spatialement par des moyens 12 de focalisation et de filtrage, ceci afin d'obtenir un faisceau dont l'intensité est uniformément répartie sur la section. Ces moyens 12 de focalisation et de filtrage sont constitués par une lentille achromatique et un diaphragme par exemple, l'ouverture du diaphragme se situant au point de focalisation de la lentille achromatique.

Le faisceau principal est ensuite refocalisé sur un objet à étudier (non représenté) par des moyens 30 de focalisation présentant un chromatisme axial, un objectif réalisé à l'aide de lentilles fabriquées dans le même type de verre, par exemple. Les différents faisceaux secondaires n'ont pas le même point de focalisation ; les points de focalisation sont répartis sur des altitudes z1, z2, ..., zn, n entier étant égal au nombre de faisceaux secondaires présents dans le faisceau principal. L'axe z représentant l'axe des altitudes des points de focalisation est confondu avec l'axe du dispositif.

Les faisceaux secondaires sont réfléchis par l'objet à étudier et renvoyés par une lame séparatrice 18 vers des moyens 20 de détection.

Lors du balayage de l'objet à étudier par le faisceau principal, pour chaque point sondé, seul un faisceau secondaire correctement focalisé sur la surface de l'objet à étudier est refocalisé au point conjugué P de son point focal. Par contre, chaque faisceau qui est focalisé sur la surface de l'objet à étudier est refocalisé par les moyens 30 de focalisation au même point de focalisation qui est le point conjugué P.

La présence d'un diaphragme 21 faisant partie des moyens de détection 20, permet de filtrer les faisceaux secondaires qui ne sont pas correctement focalisés sur la surface de l'objet à étudier.

Le système de détection délivre sur une sortie un signal qui est analysé et traité numériquement par des moyens 22 d'analyse et de traitement.

Ce dispositif traite sur un pied d'égalité tous les faisceaux correctement focalisés sur la surface de l'objet à étudier. Il ne permet pas de rendre compte du relief de l'objet mais uniquement de l'état de sa surface sur une épaisseur de 0,5 µm, par exemple.

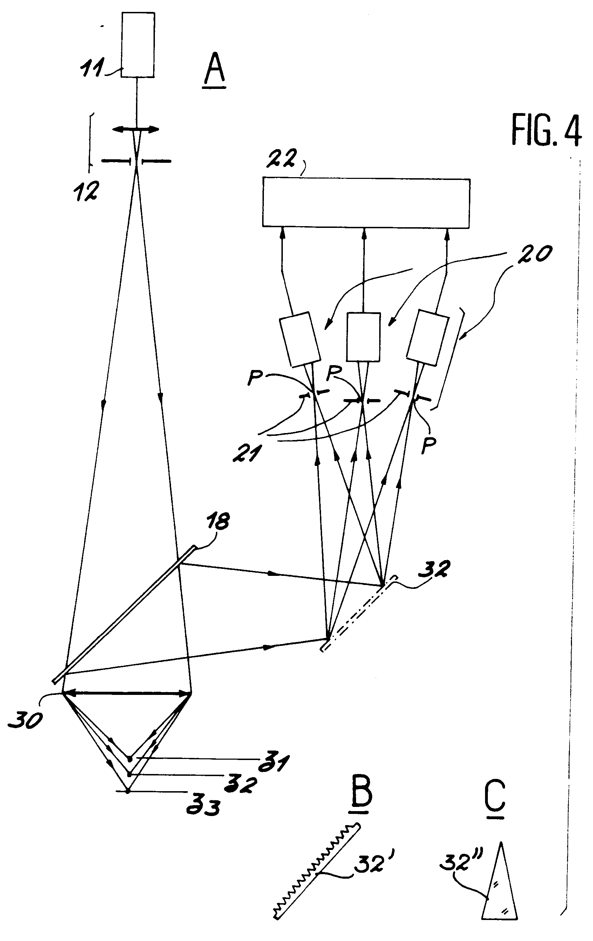

Afin de pouvoir rendre compte du relief de l'objet à étudier, une variante du dispositif selon l'invention est proposée figure 4A.

Dans un souci de simplification nullement limitatif, on a représenté trois faisceaux secondaires focalisés à des altitudes z1, z2 et z3.

Un système 32 optique à dispersion latérale est placé sur le trajet des faisceaux secondaires réfléchis par l'objet à étudier et renvoyés par la lame séparatrice 18. Les différents faisceaux secondaires sont ainsi séparés spatialement et envoyés chacun sur un système 20 de détection.

On voit figure 4B que le système 32 à dispersion latérale peut être un réseau de diffraction 32'. On voit figure 4C que le système 32 à dispersion latérale peut être un prisme 32˝.

Les systèmes de détection 20 comprennent chacun un diaphragme 21 placé au point conjugé P des points de focalisation des différents faisceaux secondaires.

Les systèmes de détection 20 délivrent sur une sortie un signal qui est analysé et traité numériquement par des moyens 22 d'analyse et de traitement.

Ce dispositif permet pour chaque point sondé de l'objet à étudier de restituer, après traitement numérique, l'altitude du faisceau secondaire correctement focalisé sur la surface de l'objet.

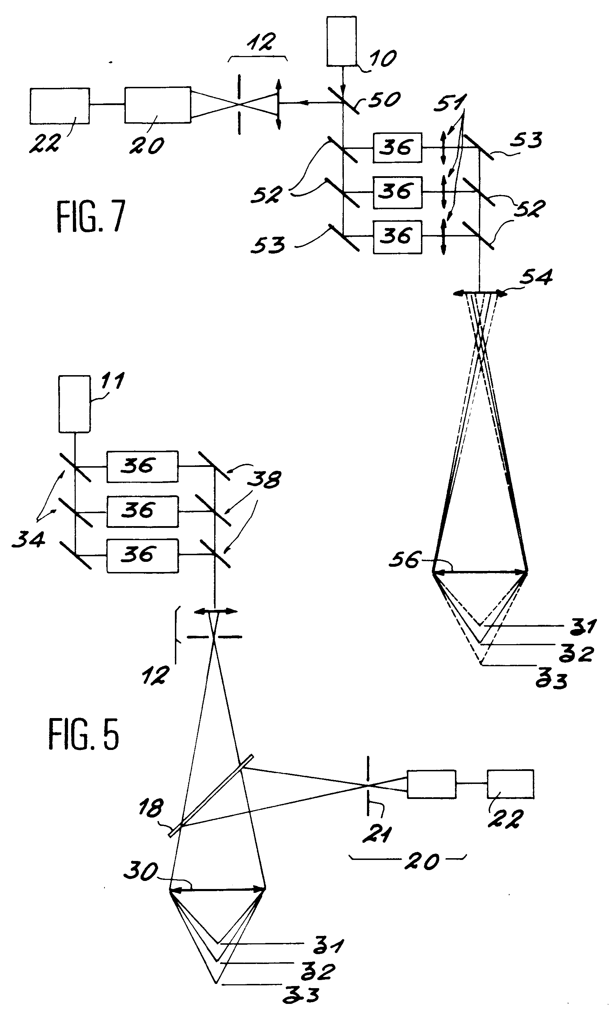

Une autre variante du dispositif selon l'invention permet d'atteindre le même résultat. On voit sur la figure 5 que les faisceaux secondaires contenus dans le faisceau principal délivré par la source lumineuse 11 sont séparés spatialement par des moyens 34. On n'a représenté dans un souci de simplification non limitatif que trois faisceaux secondaires. Chacun des faisceaux secondaires est modulé en amplitude à une fréquence particulière par des moyens 36 de modulation. Les faisceaux secondaires sont ensuite superposés pour reformer un faisceau principal, par l'intermédiaire de moyens 38 de même nature que ceux utilisés pour séparer les faisceaux secondaires. Ces moyens 34, 38 de séparation spatiale et de superposition sont des lames séparatrices, traitées de telle manière qu'elles ne réfléchissent qu'un seul des faisceaux secondaires et pas les autres, par exemple.

Le système de détection 20 comprend des moyens pour démoduler chacun des faisceaux secondaires renvoyé par la lame séparatrice 18.

On a représenté figure 6 d'autres moyens pouvant être mis en oeuvre de séparer les faisceaux secondaires, les moduler en amplitude et les recombiner.

On sépare spatialement les faisceaux secondaires constituant le faisceau principal issu de la source lumineuse à l'aide d'un réseau de diffraction 40 ; une lentille 42 permet de rendre parallèles les directions de propagation des faisceaux secondaires (trois de ces faisceaux sont représentés dans un souci de simplification non limitatif). Chacun des faisceaux secondaires est modulé en amplitude temporellement à une fréquence particulière par des moyens 36. Ces moyens 36 de modulation peuvent être des éléments acousto-optiques par exemple.

Les faisceaux secondaires sont superposés à nouveau par une lentille 44 et un réseau de diffraction 46 et renvoyés vers les moyens 12 de focalisation et de filtrage spatial (non représentés figure 6).

Un autre mode de réalisation d'un dispositif selon l'invention est représenté figure 7.

Une source lumineuse 10, telle un laser par exemple, délivre un faisceau principal.

Des moyens 52 pour diviser le faisceau principal en une pluralité de faisceaux secondaires d'égale intensité sont placés sur le trajet du faisceau principal.

Ce sont des lames séparatrices, par exemple. Après traversée de ces lames séparatrices, le faisceau principal résiduel, formant aussi un faisceau secondaire, est renvoyé par un miroir 53.

On n'a représenté que trois faisceaux secondaires dans un souci de simplification, non limitatif.

Chacun des faisceaux secondaires a son amplitude modulée temporellement à une fréquence particulière par des moyens 36 de modulation, qui peuvent être des éléments acousto-optiques, par exemple.

Chaque faisceau secondaire traverse, après modulation, des moyens 51 de focalisation, des lentilles de focale différente, par exemple, permettant la focalisation différente de chacun des faisceaux secondaires.

Les différents faisceaux secondaires sont recombinés pour reformer un faisceau principal par les moyens 52 de recombinaison, un miroir de renvoi 53 permettant la recombinaison avec les autres faisceaux secondaires du faisceau secondaire issu de la première traversée par le faisceau principal d'une lame semi transparente.

Le faisceau principal constitué des faisceaux secondaires modulés en amplitude traverse un premier système 54 de focalisation puis un second système 56 de focalisation. Ainsi les différents faisceaux secondaires sont focalisés à des altitudes (z1, z2, z3) différentes.

Les faisceaux secondaires sont réfléchis par un objet à étudier (non représenté) et retraversent en sens inverse les différents éléments du dispositif. Une lame séparatrice 50 permet le renvoi du faisceau réfléchi vers un système 12 de focalisation et de filtrage. Seuls les faisceaux secondaires focalisés sur une surface de l'objet à étudier sont transmis au système 20 de détection. Les signaux délivrés sur une sortie par le système 20 de détection sont analysés puis traités numériquement par un système 22 d'analyse et de traitement.

## Revendications

1. Procédé de microscopie optique confocale à balayage et en profondeur de champ étendue, caractérisé en ce que :
- on forme un faisceau lumineux principal constitué d'une pluralité de faisceaux lumineux secondaires se distinguant les uns des autres par au moins une de leurs caractéristiques,
- on dirige le faisceau lumineux principal vers des moyens (30, 51, 54, 56) de focalisation, dont la distance de focalisation est fonction d'au moins une desdites caractéristiques,
- on focalise à un endroit de l'objet à étudier, grâce aux moyens (30) de focalisation, en des points d'altitude différente, les différents faisceaux lumineux secondaires,
- on renvoie les faisceaux lumineux secondaires réfléchis par l'objet à étudier vers un système (20) de détection,
- on détecte l'intensité de lumière des faisceaux secondaires,
- on analyse et on traite numériquement les signaux détectés, et
- on répète les étapes précédentes en différents endroits de l'objet, effectuant ainsi un balayage du faisceau lumineux principal sur la totalité de l'objet à étudier.

2. Procédé selon la revendication 1, caractérisé en ce que les faisceaux lumineux secondaires se distinguent les uns des autres par leur longueur d'onde qui est différente pour chacun des faisceaux secondaires.

3. Procédé selon la revendication 1, caractérisé en ce que les faisceaux lumineux secondaires se distinguent les uns des autres par leur amplitude qui est modulée temporellement de façon caractéristique pour chacun des faisceaux secondaires.

4. Dispositif pour la mise en oeuvre du procédé selon l'une quelconque des revendications 1 et 2, comportant :
- une source lumineuse (11) délivrant un faisceau lumineux principal se propageant vers un objet à étudier :
- des premiers moyens (12) de focalisation et de filtrage spatial dudit faisceau lumineux principal,
- des seconds moyens (30) de focalisation, focalisant ledit faisceau sur l'objet à étudier,
- une lame séparatrice (18) renvoyant un faisceau lumineux réfléchi par l'objet à étudier,
- un système (20) de détection délivrant un signal sur une sortie, et comportant un diaphragme (21) placé en un point conjugué d'un point de focalisation des seconds moyens (30) de focalisation,
- un système (22) d'analyse et de traitement numérique ayant une entrée reliée à la sortie du système (20) de détection, dispositif caractérisé en ce que :
- la source lumineuse (11) est polychromatique et le faisceau lumineux principal est constitué d'une pluralité de faisceaux secondaires de longueurs d'ondes différentes,
et en ce que les seconds moyens (30) de focalisation présentent un chromatisme par rapport à la direction de propagation dudit faisceau lumineux principal.

5. Dispositif selon la revendication 4, caractérisé en ce qu'il comprend en outre :
- un système optique (32) à dispersion latérale placé sur le trajet du faisceau réfléchi par l'objet à étudier renvoyé par la lame séparatrice (18) et séparant latéralement par rapport à leurs directions de propagation respectives, les faisceaux secondaires de longueur d'onde différente qui constituent ledit faisceau réfléchi,
- des systèmes (20) de détection aptes à recevoir chacun un faisceau secondaire séparé par le système optique (32) à dispersion latérale, chaque système (20) de détection comprenant un diaphragme (21) placé en un point conjugué d'un point focal des moyens de focalisation, les systèmes (20) de détection délivrant des signaux sur des sorties reliées à des entrées d'un système (22) d'analyse et de traitement desdits signaux.

6. Dispositif selon la revendication 5, caractérisé en ce que le système optique (32) à dispersion latérale est un réseau de diffraction (32').

7. Dispositif selon la revendication 5, caractérisé en ce que le système optique (32) à dispersion latérale est un prisme (32˝).

8. Dispositif selon la revendication 4, caractérisé en ce qu'il comprend, sur le trajet du faisceau principal, entre la source lumineuse (11) et les premiers moyens (12) de focalisation et de filtrage :
- des moyens (34) pour séparer spatialement les différents faisceaux secondaires,
- des moyens (36) pour moduler temporellement l'amplitude de chaque faisceau secondaire à une fréquence particulière,
- des moyens (38) pour superposer les différents faisceaux secondaires pour reformer un faisceau principal, et pour diriger ledit faisceau principal vers les premiers moyens (12) de focalisation et de filtrage spatial.

9. Dispositif selon la revendication 8, caractérisé en ce que les moyens (34) pour séparer spatialement les différents faisceaux secondaires comprennent des lames séparatrices et un miroir de renvoi du faisceau principal résiduel après traversée des lames séparatrices, formant un faisceau secondaire,
et en ce que les moyens (38) pour superposer les faisceaux secondaires comprennent des lames séparatrices et un miroir de renvoi du faisceau secondaire issu d'une première séparation d'un faisceau secondaire du faisceau principal,
et en ce que les lames séparatrices ne réfléchissent qu'un seul des faisceaux secondaires et pas les autres.

10. Dispositif selon la revendication 8, caractérisé en ce que les moyens (34) pour séparer spatialement les faisceaux lumineux secondaires comprennent un réseau de diffraction (40) et une lentille (42) telle que les faisceaux lumineux secondaires après traversée de ladite lentille (42) sont parallèles et en ce que les moyens (38) pour superposer les faisceaux secondaires comprennent une lentille (44) traversée par lesdits faisceaux secondaires et un réseau de diffraction (46) renvoyant les faisceaux superposés vers les premiers moyens (12) de focalisation et de filtrage spatial.

11. Dispositif selon l'une quelconque des revendications 8 à 10, caractérisé en ce que les moyens (36) pour moduler temporellement l'amplitude de chaque faisceau secondaire sont des éléments acousto-optiques.

12. Dispositif selon l'une quelconque des revendications 4 à 11, caractérisé en ce que la source lumineuse (11) polychromatique est un laser émettant des faisceaux à au moins deux longueurs d'onde différentes.

13. Dispositif selon l'une quelconque des revendications 4 à 11, caractérisé en ce que la source lumineuse (11) polychromatique est constituée par au moins deux lasers émettant des faisceaux de longueurs d'onde différentes.

14. Dispositif pour la mise en oeuvre du procédé selon l'une quelconque des revendications 1 et 3, comportant une source lumineuse (10) délivrant un faisceau lumineux principal se propageant vers un objet à étudier, caractérisé en ce qu'il comprend :
- des moyens (52, 53) pour diviser le faisceau lumineux principal en une pluralité de faisceaux secondaires et pour renvoyer les faisceaux secondaires vers des moyens (36) pour moduler temporellement l'amplitude de chaque faisceau secondaire à une fréquence particulière,
- des premiers moyens (51) de focalisation présentant une distance de focalisation différente pour chaque faisceau secondaire,
- des moyens (52, 53) de recombinaison et de renvoi des faisceaux secondaires en un faisceau principal résultant de la recombinaison,
- des deuxièmes moyens (54, 56) de focalisation comportant un premier système (54) et un second système (56) et permettant la focalisation à des altitudes différentes de chacun des faisceaux secondaires, et en ce qu'une lame séparatrice (50), placée entre la source lumineuse (10) et les moyens (52) de séparation du faisceau principat, sur le trajet d'un faisceau réfléchi par l'objet à étudier, ledit faisceau réfléchi ayant retraversé en sens inverse les différents éléments du dispositif, renvoie ledit faisceau réfléchi vers un système (20) de détection par l'intermédiaire de moyens (12) de focalisation et de filtrage.

15. Dispositif selon la revendication 14, caractérisé en ce que la modulation de l'amplitude de chaque faisceau secondaire s'effectue à la même fréquence pour chacun des faisceaux secondaires, la phase de chacune des modulations étant différente.

16. Dispositif selon la revendication 14, caractérisé en ce que la modulation de l'amplitude de chaque faisceau secondaire s'effectue à une fréquence différente pour chacun des faisceaux secondaires.

## Patentansprüche

1. Verfahren zur optischen Abtastmikroskopie in konfokaler Anordnung mit großem Tiefenschärfebereich, dadurch **gekennzeichnet,** daß:
- ein Hauptlichtbündel formt, das aus einer Vielzahl von Sekundärlichtbündeln gebildet wird, welche sich voneinander in mindestens einem ihrer Merkmale unterscheiden,
- man das Hauptlichtbündel auf die Fokussierungseinrichtung (30, 51, 54, 56) lenkt, wobei die Brennweite von mindestens einem der genannten Merkmale abhängt,
- man mittels der Fokussierungsvorrichtung (30)die verschiedenen Sekundärlichtbündel auf eine Stelle des Studienobjekts mit Punkten verschiedener Höhe scharfstellt,
- man die durch das Studienobjekt auf ein Detektorsystem (20) reflektierten Sekundärlichtbündel zurückstrahlt,
- man die Lichtinsität des Sekundärbündels detektitiert,
- man die detektierten Signale analysiert und numerisch verarbeitet,
- man die vorhergehenden Schritte an verschiedenen stellen des Objekts wiederholt, wobei folglich auf der Gesamtheit des Studienobjekts ein Abtasten durch das Hauptlichtbündel ausgeführt wird.

2. Verfahren gemäß dem Anspruch 1, dadurch **gekennzeichnet,** daß die Sekundärlichtbündel sich gegenseitig durch ihre Wellenlänge unterscheiden, welche für jedes der Sekundärbündel verschieden ist.

3. Verfahren gemäß dem Anspruch 1, dadurch **gekennzeichnet,** daß die Sekundärlichtbündel sich gegenseitig durch ihre Amplitude -unterscheiden, welche auf eine für jedes der Sekundärbündel charakteristische Art zeitmoduliert ist.

4. Vorrichtung zur Ausführung des Verfahrens gemäß irgendeinem der Ansprüche 1 und 2 gestattet:
- eine Lichtquelle (11), welche ein sich gegen ein Studienobjekt ausbreitendes Hauptlichtbündel aussendet:
- erste Vorrichtungen (12) zur Fokussierung und räumlichen Filterung des besagten Hauptlichtbündels,
- sekundäre Vorrichtugen (30) zur Fokussierung, weiche das besagte Bündel auf das Studienobjekt fokussieren,
- eine Trennplatte (18), welche ein durch das Studienobjekt reflektiertes Lichtbündel zurücksendet,
- ein Detektorsystem (20), welches ein Signal auf den Ausgang sendet, und ein an einem mit einem Brennpunkt der sekundären Vorrichtungen (30) zur Fokussierung konjugierten Punkt plazierten Diaphragma (21),
- ein System (22) zur Analyse und zur numerischen Verarbeitung, welches ein mit dem Ausgang des Detektorsystems (20) verbundenen Eingang hat,
dadurch **gekennzeichnet,** daß:
- die Lichtquelle (11) polychromatisch ist und das Hauptlichtbündel aus einer Vielzahl von Sekundärbündeln verschiedener Wellenlänge gebildet wird,
und dadurch, daß die sekundären Vorrichtungen (30) zur Fokussierung eine Färbung hinsichtlich der Ausbreitungsrichtung des besagten Hauptlichtbündels aufweisen.

5. Vorrichtung gemäß dem Anspruch 4, dadurch gekennzeichnet, daß sie außerdem:
- ein optisches System (32), welches auf der Strecke des durch das Studienobjekt reflektierten und durch die Trennplatte (18) zurückgestrahlten Bündels angeordnet ist und in Hinsicht auf ihre entsprechenden Ausbreitungsrichtungen seitlich auftrennt, zur seitlichen Streuung der Sekundärbündel verschiedener Wellenlänge, welche die besagten reflektierten Bündel bilden,
- Detektorsysteme (20), welche dazu dienen, jeweils ein durch das optische System (32)zur seitlichen Streuung aufgetrenntes Sekundärbündel aufzufangen, umfassen jeweils ein an einem, mit einem Brennpunkt der sekundären Vorrichtungen (30) zur Fokussierung konjugierten Punkt plaziertes Diaphragma (21)und liefern die Signale auf die mit den Eingängen des Systems (22) zur Analyse und zur numerischen Verarbeitung der besagten Signale, verbundenen Ausgänge,
umfaßt.

6. Vorrichtung gemäß dem Aspruch 5, dadurch **gekennzeichnet,** daß das optische System (32) zur seitlichen Streuung ein Beugungsgitter (32') ist.

7. Vorrichtung gemäß dem Anspruch 5, dadurch **gekennzeichnet,** daß das optische System (32) zur seitlichen Streuung ein Prisma (32˝) ist.

8. Vorrichtung gemäß dem Anspruch 4, dadurch **gekennzeichnet,** daß sie auf der Strecke der Hauptbündel, zwischen der Lichtquelle (11) und den ersten Vorrichtungen (12) zur Fokussierung und zur Filterung:
- Hilfsmittel (34) zur räumlichen Auftrennung der verschiedenen Sekundärbündel,
- Hilfsmittel (36) zur Zeitmodulation der Amplituden eines jeden Sekudärbündels bei einer bestimmten Frequenz,
- Hilfsmittel (38) zur Überlagerung der verschiedenen Sekundärbündel, um wieder ein Hauptbündel zu bilden, und zur Lenkung des besagten Hauptbündels auf die ersten Vorrichtungen (12) der Fokussierung und der räumlichen Auftrennung, umfaßt.

9. Vorrichtung gemäß dem Anspruch 8, dadurch **gekennzeichnet,** daß die Hilfsmittel (34) zur räumlichen Auftrennung der verschiedenen Sekundärbündel, welche Trennplatten und einen Spiegel zum Zurückstrahlen der nach Durchquerung der Trennplatten verbleibenden Hauptbündel umfassen, ein Sekundärbündel bilden,
und daß die Hilfsmittel (38) zur Überlagerung der Sekundarbündel Trennplatten und einen Spiegel zum Zurückstrahlen der aus der ersten Auftrennung eines Sekundärbündels des Hauptbündels entsprossenen Sekundärbündels umfassen,
und daß die Trennplatten nur eine einziges Sekundärbündel reflektieren und keine weiteren.

10. Vorrrichtung gemäß dem Anspruch 8, dadurch **gekennzeichnet,** daß die Hilfsmittel (34) zur räumlichen Auftrennung der Sekundärlichtbündel ein Beugungsgitter (40) und eine Linse umfassen, derart, daß die Sekundärlichtbündel nach dem Durchgang durch besagte Linse (42) parallel sind und daß die Hilfsmittel (38) zur Überlagerung der Sekundärbündel eine Linse (44), welche durch die besagten Sekundärbündel durchstrahlt wird, und ein Beugungsgitter (46), welches die überlagerten Bündel auf die ersten Vorrichtungen (12) der Fokussierung und der räumlichen Filterung zurückstrahlt, beinhalten.

11. Vorrichtung gemäß irgendeinem der Ansprüche 8 bis 10, dadurch **gekennzeichnet,** daß die Mittel (36) zur zeitlichen Amplitudenmodulation eines jeden Sekundärbündels akkusto-opptische Elemente sind.

12. Vorrichtung gemäß irgendeinem der Ansprüche 4 bis 11, dadurch **gekennzeichnet,** daß die polychromatische Lichtquelle (11) ein Laser ist, welcher Bündel mit mindestens zwei verschiedenen Wellenlängen aussendet.

13. Vorrichtung gemäß irgendeinem der Ansprüche 4 bis 11, dadurch **gekennzeichnet,** daß die polychromatische Lichtquelle (11) aus mindestens zwei Lasern, gebildet wird, welche Bündel verschiedener Wellenlängen aussenden.

14. Vorrichtung zur Ausführung des Verfahrens gemäß irgendeinem der Ansprüche 1 und 3, welche eine Lichtquelle (10) zulässt, die ein sich gegen das Studienobjekt ausbreitendes Hauptlichtbündel aussendet, dadurch **gekennzeichnet,** daß sie:
- die Hilfsmittel (52, 53) zum Aufteilen des Hauptlichtbündels in eine Vielzahl von Sekundärbündeln und zum Zurücksenden der Sekundärbündel auf die Vorrichtung (36) zur zeitlichen Amplitudenmodulation eines jeden Sekundärbündels bei einer bestimmten Frequenz,
- erste Hilfsmittel (51) zur Fokussierung, welche für jedes Sekundärbündel verschiedene Brennweitern aufweisen,
- Hilfsmittel (52, 53) zur Wiederverbindung und zum Zurücksenden der Sekundärbündel auf ein aus der Wiederverbindung resultierendes Hauptbündel,
- zweite Hilfsmittel (54, 56) zur Fokussierung, welche ein erstes System (54) und ein zweiters System (56) zulassen und die Fokussierung der verschiedenen Höhen von jedem der Sekundärbündel erlauben,
umfaßt und daß eine Trennplatte (50), welche zwischen der Lichtquelle (10)und den Hilfsmitteln (52) zur Auftrennung des Hauptbündels auf der Strecke eines durch das Studienobjekt reflektierten Bündels, welches die verschiedenen Elemente der Vorrichtung in der Gegenrichtung zurück durchlaufen hat, angeordnet ist, das besagte reflektierte Bündel durch die dazwischenliegenden Hilfsmittel (12) zur Fokussierung und zur Filterung auf einem Detektorsystem (20) sendet.

15. Vorrichtung gemäß dem Anspruch 14, dadurch **gekennzeichnet,** daß die Amplitudenmodulation eines jeden Sekundärbündels für jedes der Sekundärbündel bei derselben Frequenz ausgeführt wird, wobei die Phase jeder dieser Modulationen verschieden ist.

16. Vorrichtung gemäß dem Anspruch 14, dadurch **gekennzeichnet,** daß daß die Amplitudenmodulation eines jeden Sekundärbündels bei einer für jedes dieser Sekundärbündel verschiedenen Frequenz ausgeführt wird.

## Claims

1. Method for extended field, in-depth, scanning, confocal optical microscopy, characterized in that:
- a principal light beam is formed, which is constituted by a plurality of secondary light beams differing from one another by at least one of their characteristics,
- the principal light beam is directed to focussing means (30,51,54,56), whose focussing distance is a function of at least one of the said characteristics,
- focussing takes place onto one point of the object to be studied, using the focussing means (30) and at different altitude points, the different secondary light beams,
- the secondary light beams reflected by the object to be studied are returned to a detection system (20),
- the light intensity of the secondary beams is detected,
- analysis and digital processing take place of the detected signals and
- the preceding stages are repeated at different points of the object, thus carrying out a scan of the principal light beam on the entire object to be studied.

2. Method according to claim 1, characterized in that the secondary light beams differ from one another by their wavelength, which differs for each of the secondary beams.

3. Method according to claim 1, characterized in that the secondary light beams differ from one another by their amplitude, which is time-modulated in characteristic manner for each of the secondary beams.

4. Apparatus for performing the method according to either of the claims 1 and 2, comprising:
- a light source (11) supplying a principal light beam propagating towards an object to be studied,
- first means (12) for the focussing and spatial filtering of said principal light beam,
- second focussing means (30) focussing said beam onto the object to be studied,
- a separating plate (18) returning a light beam reflected by the object to be studied,
- a detection system (20) supplying a signal to an output and having a diaphragm (21) placed at a conjugate point of a focussing point of the second focussing means (30) ,
- an analysis and digital processing system (22) having an input connected to the output of the detection system (20), said apparatus being characterized in that:
- the light source (11) is polychromatic and the principal light beam is constituted by a plurality of secondary beams of different wavelengths
and in that the second focussing means (30) have a chromatism with respect to the propagation direction of said principal light beam.

5. Apparatus according to claim 4, characterized in that it also comprises:
- an optical system (32) with lateral dispersion placed on the path of the beam reflected by the object to be studied returned by the separating plate (18) and laterally separating with respect to their respective propagation directions, the secondary beams of different wavelength constituting said reflected beam,
- detection systems (20) able to in each case receive a secondary beam separated by the optical system (32) with lateral dispersion, each detection system (20) incorporating a diaphragm (21) placed at a conjugate point of a focal point of the focussing means, the detection systems (20) supplying signals to outputs connected to inputs of a system (22) for the analysis and processing of said signals.

6. Apparatus according to claim 5, characterized in that the optical system (32) with lateral dispersion is a diffractive grating (32').

7. Apparatus according to claim 5, characterized in that the optical system (32) with lateral dispersion is a prism (32˝).

8. Apparatus according to claim 4, characterized in that it comprises, on the path of the principal beam, between the light source (11) and the first focussing and filtering means (12):
- means (34) for spatially separating the different secondary beams,
- means (36) for the time modulation of the amplitude of each secondary beam at a particular frequency,
- means (38) for superimposing the different secondary beams for re-forming a principal beam and for directing said principal beam to the focussing and spatial filtering means (12).

9. Apparatus according to claim 8, characterized in that the means (34) for spatially separating the different secondary beams comprise separating plates and a mirror for returning or reflecting the residual principal beam after traversing separating plates and forming a secondary beam,
in that the means (38) for superimposing the secondary beams comprise separating plates and a mirror for returning or reflecting the secondary beam resulting from a first separation of a secondary beam from the principal beam,
and in that the separating plates only reflect one of the secondary beams and not the others.

10. Apparatus according to claim 8, characterized in that the means (34) for spatially separating the secondary light beams comprise a diffractive grating (40) and a lens (42), so that the secondary light beams after traversing said lens (42) are parallel and in that the means (38) for superimposing the secondary beams comprise a lens (44) traversed by said secondary beams and a diffractive grating (46) returning the superimposed beams to the first focussing and spatial filtering means (12).

11. Apparatus according to any one of the claims 8 to 10, characterized in that the means (36) for the time modulation of the amplitude of each secondary beam are acousto-optical elements.

12. Apparatus according to any one of the claims 4 to 11, characterized in that the polychromatic light source (11) is a laser emitting beams at at least two different wavelengths.

13. Apparatus according to any one of the claims 4 to 11, characterized in that the polychromatic light source (11) is constituted by at least two lasers emitting beams of different wavelengths.

14. Apparatus for performing the method according to any one of the claims 1 and 3 comprising a light source (10) supplying a principal light beam propagating towards an object to be studied, characterized in that it comprises:
- means (52,53) for dividing the principal light beam into a plurality of secondary beams and for returning the secondary beams to the means (36) for the time modulation of the amplitude of each secondary beam at a particular frequency,
- first focussing means (51) having a different focussing distance for each secondary beam,
- means (52,53) for the recombination and return of secondary beams into a principal beam resulting from the recombination,
- second focussing means (54,56) having a first system (54) and a second system (56) and permitting the focussing at different altitudes of each of the secondary beams,
- and in that a separating plate (50), placed between the light source (10) and the principal beam separating means (52), on the path of a beam reflected by the object to be studied, said reflected beam having retraversed in the opposite direction the different elements of the apparatus, returns said reflected beam to a detection system (20) via focussing and filtering means (12).

15. Apparatus according to claim 14, characterized in that the modulation of the amplitude of each secondary beam takes place at the same frequency for each of the secondary beams, the phase of each of the modulations being different.

16. Apparatus according to claim 14, characterized in that the amplitude modulation of each secondary beam takes place at a different frequency for each of the secondary beams.
